# EUROPEAN PATENT APPLICATION

(11) **EP 3 723 437 A1**
(43) Date of publication of application: **14.10.2020**
(21) Application number: 18908718.2
(22) Date of filing: 06.03.2018
(51) Int. Cl.: H04W 72/12

(54) **RESPONSE INFORMATION PROCESSING METHOD, DEVICE AND STORAGE MEDIUM**

(71) Applicant: GUANGDONG OPPO MOBILE TELECOMMUNICATIONS CORP., LTD., Wusha, Chang'an Dongguan, Guangdong 523860 (CN)
(72) Inventor: LIN, Yanan, Dongguan, Guangdong 523860 (CN)
(74) Representative: Penza, Giancarlo
(86) International application number: PCT/CN2018/078103
(87) International publication number: WO 2019/169542

(57) **Abstract**

Disclosed by the present invention is a response information processing method, comprising: a network device determines whether a user equipment sends the response information corresponding to the target data, and obtains the determination result; sending an instruction signaling carrying the determination result to the user equipment; and the user equipment determines, on the basis of the instruction signaling sent by the network device, whether to send the response information corresponding to the target data. Further disclosed are another response information processing method, a network device, a user equipment and a storage medium.

## Description

### Technical Field

The present disclosure relates to the field of wireless communication technology, and especially, to a response message processing method, an apparatus, and a storage medium.

### Related Art

In a fifth generation (5G) new radio (NR) system, a transmission period used by user equipment (UE) for transmitting an acknowledge (ACK) or non-acknowledge (NACK) response message for data may be dynamically indicated by a gNodeB (gNB). For example, the gNB schedules a physical downlink shared channel (PDSCH) in a slot n for transmission, and indicates a transmission period kl in a downlink grant (DL grant) for scheduling the PDSCH. The UE transmits an ACK/a NACK response message corresponding to the PDSCH in a slot (n+k1) according to an indication from the gNB.

In addition, the 5G NR system supports an ultra-reliable & low latency communication (URLLC) service. In a period division duplexing (TDD) system, since uplink and downlink resources are multiplexed in a period division manner, when a period for the UE to transmit a response message of the PDSCH, both latency of data processing and an available uplink resource location need to be considered. Therefore, when the URLLC service is transmitted by using the TDD system, the earliest transportable uplink feedback period resource corresponding to the PDSCH transmitted at a moment has already exceeded a service latency requirement. In this case, the UE continues to transmit a corresponding ACK/NACK response message. As a result, the power consumption of the UE and overheads of an uplink control channel in the 5G NR system are increased, and the uplink control channel may conflict with another channel in the 5G NR system.

### SUMMARY

To resolve the foregoing technical issues, implementations of the present disclosure provide a response message processing method, an apparatus, and a storage medium.

An implementation of the present disclosure provides a response message processing method, including:
determining, by UE based on indication signaling sent by a network device, whether to send a response message corresponding to target data.

An implementation of the present disclosure further provides a response message processing method, including:
determining, by a network device, whether UE sends a response message corresponding to target data, and obtaining a determination result; and
sending indication signaling carrying the determination result to the UE.

An implementation of the present disclosure provides UE, including:
a receiving unit, configured to receive indication signaling sent by a network device; and
a determination unit, configured to determine, based on the indication signaling, whether to send a response message corresponding to target data.

An implementation of the present disclosure provides a network device, including:
a judgment unit, configured to determine whether UE sends a response message corresponding to target data, and obtain a determination result; and
a sending unit, configured to send indication signaling carrying the determination result to the UE.

An implementation of the present disclosure further provides other UE, including a processor and a memory configured to store a computer program executable on the processor, where
the processor is configured to execute the computer program to perform the following step: determining, based on indication signaling sent by a network device, whether to send a response message corresponding to target data.

An implementation of the present disclosure further provides another network device, including a processor and a memory configured to store a computer program executable on the processor, where
the processor is configured to execute the computer program to perform the following steps: determining whether UE sends a response message corresponding to target data, and obtaining a determination result; and
sending indication signaling carrying the determination result to the UE.

An implementation of the present disclosure provides a storage medium, storing an executable program, where a processor executes the executable program to implement the following steps: determining, based on indication signaling sent by a network device, whether to send a response message corresponding to target data;
or implement the following steps: determining whether UE sends a response message corresponding to target data, and obtaining a determination result; and sending indication signaling carrying the determination result to the UE.

According to the response message processing method, device, and storage medium provided in the implementations of the present disclosure, a network device determines in advance whether UE needs to send a response message corresponding to target data, adds a determination result to indication signaling, and sends the indication signaling to the UE, so that the UE may send or not send the response message corresponding to the target data according to an indication of the network device. Therefore, the UE is prevented from continuing to transmit the response message corresponding to the target data when it is unnecessary to transmit the response message corresponding to the target data. In this way, the power consumption of the UE and overheads of an uplink control channel in a 5G NR system are reduced, and the uplink control channel can be prevented from conflicting with another channel in the 5G NR system.

### BRIEF DESCRIPTION OF THE DRAWINGS

FIG. 1 is a schematic diagram of a processing procedure of a response message processing method according to Implementation 1 of the present disclosure;
FIG. 2 is a schematic diagram of a processing procedure of a response message processing method according to Implementation 2 of the present disclosure;
FIG. 3 is a schematic diagram of a processing procedure of a response message processing method according to Implementation 3 of the present disclosure;
FIG. 4 is a schematic diagram of a correspondence between a value of a second information field and a transmission period of a response message according to Implementation 4 of the present disclosure;
FIG. 5 is a schematic diagram of a processing procedure of a response message processing method according to Implementation 5 of the present disclosure;
FIG. 6 is a schematic diagram of a processing procedure of a response message processing method according to Implementation 6 of the present disclosure;
FIG. 7 is a schematic structural diagram of UE according to Implementation 7 of the present disclosure;
FIG. 8 is a schematic structural diagram of a network device according to Implementation 8 of the present disclosure; and
FIG. 9 is a schematic structural diagram of hardware of an electronic device according to an implementation of the present disclosure.

### DETAILED DESCRIPTION

To make the features and technical content of the implementations of the present disclosure more comprehensible, the implementation of the implementations of the present disclosure is described below in detail with reference to the accompanying drawings. The accompanying drawings are merely used for reference and description, and are not used to limit the implementations of the present disclosure.

### Implementation 1

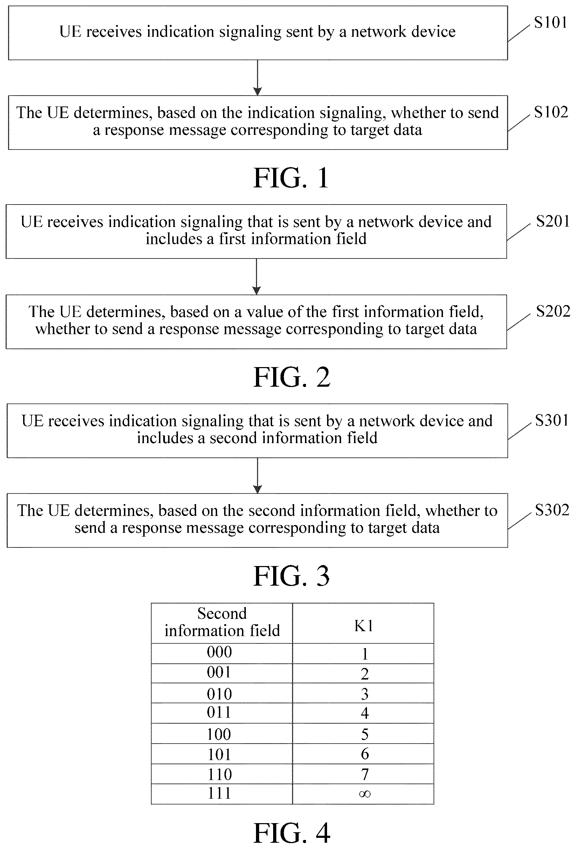

Implementation 1 of the present disclosure provides a response message processing method applied to UE. As shown in FIG. 1, a processing procedure of the response message processing method includes the following steps:
Step S101. UE receives indication signaling sent by a network device.

The indication signaling herein is used for scheduling transmission of target data, and the indication signaling is downlink control signaling.

Step S102. The UE determines, based on the indication signaling, whether to send a response message corresponding to target data.

The response message corresponding to the target data herein is an ACK/a NACK. The ACK represents that the UE acknowledges that the target data sent by the network device is received, and the NACK represents that the UE acknowledges that the target data sent by the network device is not received.

When the UE determines to send the response message corresponding to the target data, it indicates that the UE needs to send an ACK/a NACK message corresponding to the target data to the network device. When the UE determines not to send the response message corresponding to the target data, it indicates that the UE does not need to send the ACK/NACK message corresponding to the target data to the network device.

### Implementation 2

Implementation 2 of the present disclosure provides a response message processing method applied to UE. As shown in FIG. 2, a processing procedure of the response message processing method includes the following steps:
Step S201. UE receives indication signaling that is sent by a network device and includes a first information field.

The indication signaling herein is used for scheduling transmission of target data, and the indication signaling is downlink control signaling.

Step S202. The UE determines, based on a value of the first information field, whether to send a response message corresponding to target data.

In an implementation, the first information field is used for indicating whether the UE sends the response message corresponding to the target data. When determining that the value of the first information field is a first threshold, the UE determines not to send the response message corresponding to the target data, and when determining that the value of the first information field is a second threshold, the UE determines to send the response message corresponding to the target data.

For example, when determining that the value of the first information field is 0, the UE does not send the response message corresponding to the target data. When determining that the value of the first information field is 1, the UE sends the response message corresponding to the target data. Herein, the value of the first information field being 0 and 1 is merely used as an example. During actual application, the value of the first information field may be set to another value different from 0 and 1, which is used for indicating sending or not sending the response message corresponding to the target data.

The values of the first threshold and the second threshold herein may be both configured by the network device or agreed in a protocol.

### Implementation 3

Implementation 3 of the present disclosure provides a response message processing method applied to UE. As shown in FIG. 3, a processing procedure of the response message processing method includes the following steps:
Step S301. UE receives indication signaling that is sent by a network device and includes a second information field.

The indication signaling herein is used for scheduling transmission of target data, and the indication signaling is downlink control signaling. The second information field includes a PDSCH-to-hybrid automatic repeat request (HARQ) feedback timing indicator.

Step S302. The UE determines, based on the second information field, whether to send a response message corresponding to target data.

In an implementation, the second information field is used for indicating a transmission period of the response message corresponding to the target data, or the second information field is used for indicating not sending the response message corresponding to the target data. When a value of the second information field is used for indicating not sending the response message corresponding to the target data, the UE determines not to send the response message corresponding to the target data. When the value of the second information field is used for indicating a transmission period of the response message corresponding to the target data, the UE determines to send the response message corresponding to the target data to the network device within the transmission period of the response message indicated in the second information field.

In another implementation+n, the second information field is used for indicating a transmission period of the response message corresponding to the target data. When the transmission period is a third threshold, the UE determines not to send the response message corresponding to the target data. When the transmission period is not the third threshold (a value different from the third threshold), the UE determines to send the response message corresponding to the target data within the transmission period of the response message indicated in the second information field.

In this case, the UE obtains a plurality of optional values of the transmission period of the response message corresponding to the target data in advance through configuration via high-layer signaling or agreement in a protocol. One or more values of the plurality of optional values are used for indicating that the UE does not send the response message corresponding to the target data, and the second information field is used for indicating one of a plurality of transmission periods of the response message corresponding to the target data.

For example, the target data is transmitted in a slot n, and a response message corresponding to the target data is transmitted in a slot (n+k1). FIG. 4 shows a correspondence (a first mapping relationship) between the value of the second information field and the transmission period of the response message corresponding to the target data. The second information field is formed by three bits and can indicate at most eight values of the transmission period. When a transmission period indicated by the network device through the second information field is oo, it indicates that the UE does not send the response message corresponding to the target data. The first mapping relationship herein is configured by the network device or agreed in a protocol.

In another implementation, the second information field is used for indicating a transmission period of the response message corresponding to the target data. When the transmission period is less than or equal to a fourth threshold, it is determined to send the response message corresponding to the target data within the transmission period of the response message indicated in the second information field.

For example, the target data is transmitted in a slot n, and a response message corresponding to the target data is transmitted in a slot (n+k1). FIG. 4 shows a correspondence (a first mapping relationship) between the value of the second information field and the transmission period of the response message corresponding to the target data. The second information field is formed by three bits and can indicate at most eight values of the transmission period, and the fourth threshold is set to 8. When a transmission period indicated by the network device through the second information field is greater than 8, it indicates that the UE does not send the response message corresponding to the target data. The first mapping relationship herein is configured by the network device or agreed in a protocol.

In still another implementation, when determining that the value of the second information field is a fifth threshold, the UE determines not to send the response message corresponding to the target data. When determining that the value of the second information field is not the fifth threshold, the UE determines to send the response message corresponding to the target data within the transmission period of the response message indicated in the second information field.

The value of any one of the third threshold, the fourth threshold, and the fifth threshold herein may be configured by the network device or agreed in a protocol.

### Implementation 4

Based on Implementations 1 to 3, Implementation 4 of the present disclosure provides a response message processing method, including the following steps:
Step 401. After determining to send a response message corresponding to target data, UE determines a physical resource for transmitting the response message, where a third information field in the indication signaling is used for indicating information related to the transmission of the response message.

Alternatively, when the UE determines not to send the response message corresponding to the target data, the third information field in the indication signaling is used for indicating information unrelated to the transmission of the response message. The information unrelated to the transmission of the response message at least includes a physical uplink control channel (PUCCH) resource indication information field, a downlink assignment index (DAI) information field or the like. The PUCCH resource indication information field and the DAI information field are set to preset values.

Alternatively, when the UE determines not to send the response message corresponding to the target data, the indication signaling is used for indicating other information, for example, a bandwidth part (BWP) indicator in resource part indicating information, used for indicating a BWP for transmitting the target data to implement dynamic switching of the BWP; a transmission configuration indication, an antenna port(s), a power channel state information-reference signal (ZP CSI-RS) trigger, a sounding reference signal (SRS) request, demodulation reference signal (DMRS) sequence initialization, and the like.

### Implementation 5

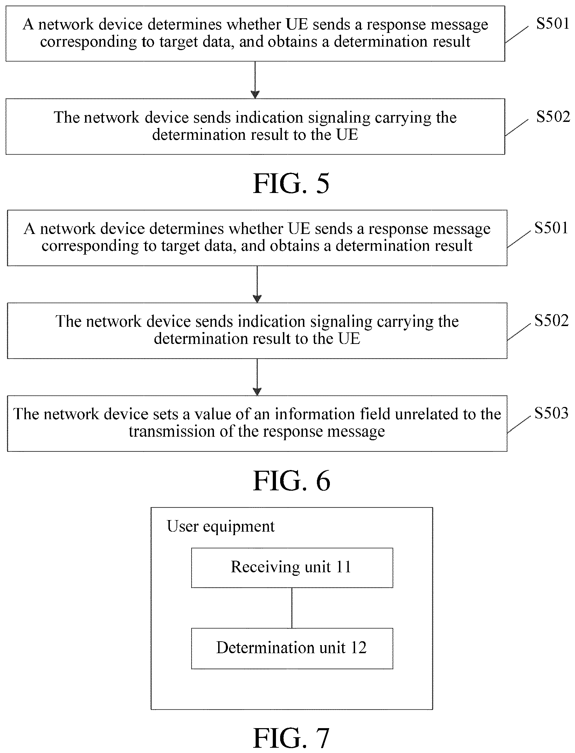

Implementation 5 of the present disclosure provides a response message processing method applied to a network device. As shown in FIG. 5, a processing procedure of the response message processing method includes the following steps:
Step 501. A network device determines whether UE sends a response message corresponding to target data, and obtains a determination result.

In an implementation, for improving the stability of a 5G NR system, each time when the network device schedules downlink target data, information such as modulation and coding scheme (MCS) is dynamically adjusted, so that information transmitted by the network device each time is not identical.

For example, for the PDSCH which is scheduled in a relatively early moment (a moment that is relatively far away from a latency uplink), the MCS is determined based on a block error rate (BLER) of 99%, and an accuracy rate of 99.999% is reached through retransmission, thereby improving the efficiency of the 5G NR system. However, for the PDSCH which is scheduled in a relatively late moment (a moment that is relatively close to the latency uplink), when the MCS is determined based on a target BLER of 99.999%, HARD retransmission does not need to be performed on the PDSCH, and the UE also does not need to transmit the response message corresponding to the target data.

Step 502. The network device sends indication signaling carrying the determination result to the UE.

The indication signaling herein is used for scheduling transmission of target data, and the indication signaling is downlink control signaling. The determination result includes: the UE sends the response message corresponding to the target data, or the UE does not send the response message corresponding to the target data.

In an implementation, the indication signaling includes a first information field that is used for indicating whether the UE sends the response message corresponding to the target data. When the value of the first information field is a first threshold, it indicates that the UE does not send the response message corresponding to the target data. When the value of the first information field is a second threshold, it indicates that the UE sends the response message corresponding to the target data.

For example, when the value of the first information field is 0, it indicates that the UE does not send the response message corresponding to the target data. When the value of the first information field is 1, it indicates that the UE sends the response message corresponding to the target data. Herein, the value of the first information field being 0 and 1 is merely used as an example. During actual application, the value of the first information field may be set to another value different from 0 and 1, which is used for indicating sending or not sending the response message corresponding to the target data.

In another implementation, the indication signaling includes a second information field, and the second information field includes a PDSCH-to-HARQ feedback timing indicator. When a transmission period of the response message carried in the second information field is a third threshold, it indicates that the UE does not send the response message corresponding to the target data. Alternatively, when the transmission period of the response message carried in the second information field is not the third threshold, it indicates that the UE sends the response message corresponding to the target data within the transmission period of the response message indicated in the second information field. Alternatively, when the transmission period of the response message indicated in the second information field is less than or equal to a fourth threshold, it indicates that the UE sends the response message corresponding to the transmission period within the transmission period of the response message indicated in the second information field.

In still another implementation, when the value of the second information field is a fifth threshold, it indicates that the UE does not send the response message corresponding to the target data. Alternatively, when the value of the second information field is not the fifth threshold, it indicates that the UE sends the response message corresponding to the target data within the transmission period of the response message indicated in the second information field.

In an optional implementation, a correspondence (a first mapping relationship) between the value of the second information field and the transmission period of the response message corresponding to the target data is set in advance, so that the UE determines, according to the value of the second information field and the first mapping relationship, whether to send the response message corresponding to the target data.

In the implementations of the present disclosure, the values of the first threshold, the second threshold, the third threshold, the fourth threshold, and the fifth threshold and the first mapping relationship may all be configured by the network device or agreed in a protocol. The functions of the network device may be implemented by a base station.

### Implementation 6

Implementation 6 of the present disclosure provides a response message processing method applied to a network device. A processing procedure of the response message processing method, as shown in FIG. 6, is similar to Implementation 5. A difference between Implementations 6 and 5 lies in that, when the indication signaling indicates that the UE does not send the response message corresponding to the target data, the process further includes the following steps:
Step 503. The network device sets a value of a third information field unrelated to the transmission of the response message.

Herein, the network device sets a value of the third information field unrelated to the transmission of the response message, so that the indication signaling is used for indicating information unrelated to the transmission of the response message.

The third information field unrelated to the transmission of the response message at least includes the PUCCH resource indication information field, the DAI information field or the like. The PUCCH resource indication information field and the DAI information field are set to preset values.

Alternatively, when it indicates that the UE does not send the response message corresponding to the target data, the indication signaling is used for indicating other information, for example, a BWP indicator in resource part indicating information, used for indicating a BWP for transmitting the target data to implement dynamic switching of the BWP; a transmission configuration indication, an antenna port(s), a ZP CSI-RS trigger, an SRS request, DMRS sequence initialization, and the like.

In another implementation, when the indication signaling indicates that the UE sends the response message corresponding to the target data, the third information field is used for indicating information related to transmission of the response message.

### Implementation 7

Implementation 7 of the present disclosure provides UE. The structure of the UE, as shown in FIG. 7, includes a receiving unit 11 and a determination unit 12.

The receiving unit 11 is configured to receive indication signaling sent by a network device.

The determination unit 12 is configured to determine, based on the indication signaling, whether to send a response message corresponding to target data.

The response message corresponding to the target data herein is an ACK or a NACK. The ACK represents that the UE acknowledges that the target data sent by the network device is received, and the NACK represents that the UE acknowledges that the target data sent by the network device is not received.

When it is determined to send the response message corresponding to the target data, it indicates that the UE needs to send an ACK/a NACK message corresponding to the target data to the network device. When it is determined not to send the response message corresponding to the target data, it indicates that the UE does not need to send the ACK/NACK message corresponding to the target data to the network device.

In an implementation, the indication signaling includes a first information field. The determination unit 12 is configured to determine, based on a value of the first information field, whether to send the response message corresponding to the target data.

The determination unit 12 is configured to: determine not to send the response message corresponding to the target data when it is determined that the value of the first information field is a first threshold; or
determine to send the response message corresponding to the target data when it is determined that the value of the first information field is a second threshold.

For example, when determining that the value of the first information field is 0, the UE does not send the response message corresponding to the target data. When determining that the value of the first information field is 1, the UE sends the response message corresponding to the target data. Herein, the value of the first information field being 0 and 1 is merely used as an example. During actual application, the value of the first information field may be set to another value different from 0 and 1, which is used for indicating sending or not sending the response message corresponding to the target data.

In an implementation, the indication signaling includes a second information field;
When a transmission period of the response message carried in the second information field is a third threshold, it indicates that the UE does not send the response message corresponding to the target data. Alternatively, when the transmission period of the response message carried in the second information field is not the third threshold, it indicates that the UE sends the response message corresponding to the target data within the transmission period of the response message indicated in the second information field. Alternatively, when the transmission period of the response message indicated in the second information field is less than or equal to a fourth threshold, it is determined to send the response message corresponding to the transmission period within the transmission period of the response message indicated in the second information field. The second information field includes a PDSCH-to-HARQ feedback timing indicator.

In an implementation, the indication signaling includes a second information field. When the value of the second information field is a fifth threshold, it indicates that the UE does not send the response message corresponding to the target data. When the value of the second information field is not the fifth threshold, it indicates that the UE sends the response message corresponding to the target data within the transmission period of the response message indicated in the second information field. The second information field includes a PDSCH-to-HARQ feedback timing indicator.

In an implementation, the determination unit 12 is further configured to determine, according to the value of the second information field and a first mapping relationship, the transmission period of the response message indicated in the second information field, where the first mapping relationship is configured by the network device or agreed in a protocol.

In this case, the UE obtains a plurality of optional values of the transmission period of the response message corresponding to the target data in advance through configuration via high-layer signaling or agreement in a protocol. One or more values of the plurality of optional values are used for indicating that the UE does not send the response message corresponding to the target data, and the second information field is used for indicating one of a plurality of transmission periods of the response message corresponding to the target data.

In an implementation, the determination unit 12 is further configured to determine a physical resource for transmitting the response message.

In an implementation, when the determination unit 12 determines not to send the response message corresponding to the target data, the indication signaling is used for indicating information unrelated to the transmission of the response message; and
when the determination unit 12 determines to send the response message corresponding to the target data, a third information field is used for indicating information related to transmission of the response message.

In an implementation, any one of the values of the first threshold, the second threshold, the third threshold, the fourth threshold, and the fifth threshold may be configured by the network device or agreed in a protocol.

In an implementation, the indication signaling is used for scheduling transmission of the target data.

In an implementation, the indication signaling is downlink control signaling.

### Implementation 8

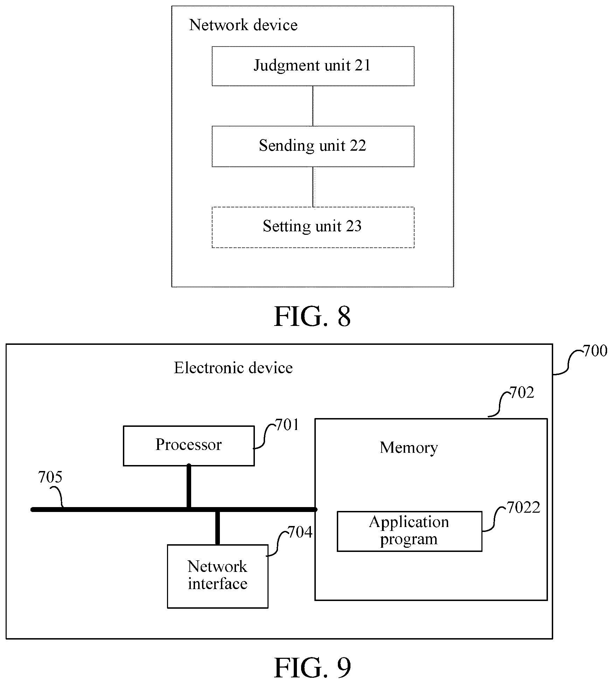

Implementation 8 of the present disclosure provides a network device. The structure of the network device, as shown in FIG. 8, includes a judgment unit 21 and a sending unit 22.

The judgment unit 21 is configured to determine whether UE sends a response message corresponding to target data, and obtain a determination result.

For improving the stability of a 5G NR system, each time when the network device schedules downlink target data, information such as MCS is dynamically adjusted, so that information transmitted by the network device each time is not identical.

For example, for the PDSCH which is scheduled in a relatively early moment (a moment that is relatively far away from a latency uplink), the MCS is determined based on a BLER of 99%, and an accuracy rate of 99.999% is reached through retransmission, thereby improving the efficiency of the 5G NR system. However, for the PDSCH which is scheduled in a relatively late moment (a moment that is relatively close to the latency uplink), when the MCS is determined based on a target BLER of 99.999%, HARD retransmission does not need to be performed on the PDSCH, and the UE also does not need to transmit the response message corresponding to the target data.

The sending unit 22 is configured to send indication signaling carrying the determination result to the UE.

In an implementation, the indication signaling includes a first information field.

When the value of the first information field is a first threshold, it indicates that the UE does not send the response message corresponding to the target data, and when the value of the first information field is a first threshold, it indicates that the UE sends the response message corresponding to the target data.

For example, when the value of the first information field is 0, it indicates that the UE does not send the response message corresponding to the target data, and when the value of the first information field is 1, it indicates that the UE sends the response message corresponding to the target data. Herein, the value of the first information field being 0 and 1 is merely used as an example. During actual application, the value of the first information field may be set to another value different from 0 and 1, which is used for indicating sending or not sending the response message corresponding to the target data.

In an implementation, the indication signaling includes a second information field.

When a transmission period of the response message carried in the second information field is a third threshold, it indicates that the UE does not send the response message corresponding to the target data. Alternatively, when the transmission period of the response message carried in the second information field is not the third threshold, it indicates that the UE sends the response message corresponding to the target data within the transmission period. Alternatively, when the transmission period of the response message indicated in the second information field is less than or equal to a fourth threshold, it indicates that the UE sends the response message corresponding to the transmission period within the transmission period of the response message indicated in the second information field. The second information field includes a PDSCH-to-HARQ feedback timing indicator.

In an implementation, the indication signaling includes a second information field. When a value of the second information field is a fifth threshold, it indicates that the UE does not send the response message corresponding to the target data.

When the value of the second information field is not the fifth threshold, it indicates that the UE sends the response message corresponding to the target data within the transmission period indicated in the second information field. The second information field comprises a PDSCH-to-HARQ feedback timing indicator.

In an optional implementation, a correspondence (a first mapping relationship) between the value of the second information field and the transmission period of the response message corresponding to the target data is set in advance, so that the UE can determine, according to the value of the second information field and the first mapping relationship, whether to send the response message corresponding to the target data.

In an implementation, the value of any one of the first threshold, the second threshold, the third threshold, the fourth threshold, and the fifth threshold may be configured by the network device or agreed in a protocol.

In an implementation, the network device further includes:
a setting unit 23, configured to set a value of an information field unrelated to the transmission of the response message when the indication signaling indicates that the UE does not send the response message corresponding to the target data, so that the indication signaling is used for indicating information related to transmission of the response message.

In an implementation, the indication signaling is used for scheduling transmission of the target data.

In an implementation, the indication signaling is downlink control signaling.

A person skilled in the art should know that the implementations of the present disclosure may be provided as a method, a system or a computer program product. Therefore, the present disclosure may adopt the form of a hardware implementation, a software implementation or an implementation combined in the software aspect and the hardware aspect. In addition, the present disclosure may adopt the form of a computer program product that may be implemented on one or more computer-usable storage media (includes but is not limited to a disk memory and an optical memory) which include computer-usable program codes.

Correspondingly, an implementation of the present disclosure further provides a computer storage medium, where the computer storage medium stores a computer program, and a processor executes the computer program to implement the following step:
determining, based on indication signaling sent by a network device, whether to send a response message corresponding to target data.

An implementation of the present disclosure further provides another computer storage medium, where the computer storage medium stores a computer program, and a processor executes the computer program to implement the following steps:
determining whether UE sends a response message corresponding to target data, and obtaining a determination result; and
sending indication signaling carrying the determination result to the UE.

FIG. 9 is a schematic structural diagram of hardware of an electronic device (a network device or UE) according to an implementation of the present disclosure. An electronic device 700 at least includes one processor 701, a memory 701, and at least one network interface 704. All components in a server 700 are coupled together by using a bus system 705. It may be understood that the bus system 705 is configured to implement connection and communication between these components. In addition to a data bus, the bus system 705 further includes a power bus, a control bus, and a status signal bus. However, for clear description, all buses in FIG. 9 are marked as the bus system 705.

It may be understood that the memory 702 may be a volatile memory or a non-volatile memory or may include both a volatile memory and a non-volatile memory. The non-volatile memory may be a read-only memory (ROM), a programmable ROM (PROM), an erasable programmable ROM (EPROM), an electrically erasable programmable ROM (EEPROM), a ferromagnetic random access memory (FRAM), a flash memory, a magnetic surface memory, a compact disc, or a compact disc ROM (CD-ROM). The magnetic surface memory may be a magnetic-disk memory or a magnetic tape memory. The volatile memory may be a random access memory (RAM), and is used for external cache. Through exemplary but not restrictive description, various forms of RAM are available. For example, a static RAM (SRAM), a synchronous static RAM (SSRAM), a dynamic RAM (DRAM), a synchronous dynamic RAM (SDRAM), a double data rate synchronous dynamic RAM (DDR SDRAM), an enhanced synchronous dynamic RAM (ESDRAM), a SyncLink dynamic RAM (SLDRAM), and a direct rambus RAM (DRRAM). The memory 702 described in an implementation of the present disclosure is intended to include but not to be limited to these and any other memory of a suitable type.

The memory 702 in the implementation of the present disclosure is configured to store various types of data for supporting operation of the electronic device 700. An example of the data includes any computer program applied to be operated on the electronic device 700, such as, an application program 7022. A program for implementing the method of the implementation of the present disclosure may be included in the application program 7022.

The method disclosed in the implementation of the present disclosure may be applied to the processor 701 or may be implemented by the processor 701. The processor 701 may be an integrated circuit chip with a signal processing capability. In an implementation process, all steps of the foregoing method may be completed by an integrated logic circuit of hardware in the processor 701 or be completed in a software form. The foregoing processor 701 may be a general purpose processor, a digital signal processor (DSP), another programmable logic device, a discrete gate or a transistor logic device, a discrete hardware component or the like. The processor 701 may implement or execute various methods, steps and logic block diagrams in the implementations of the present disclosure. The general purpose processor may be a microprocessor or any common processor. Steps in combination with the method disclosed in the implementation of the present disclosure may be directly presented as being performed and completed by a hardware decoding processor, or may be performed and completed by a combination of a hardware module and a software module in the decoding processor. The software module may be located in a storage medium, and the storage medium is located in the memory 702. The processor 701 reads the information in the memory 702 and completes the steps of the foregoing method in combination with hardware thereof.

In an exemplary implementation, the electronic device 700 may be implemented by one or more application specific integrated circuits (ASIC), DSPs, programmable logic devices (PLD), complex programmable logic devices (CPLD), field programmable gate arrays (FPGA), general purpose processors, controllers, microcontroller units (MCUs), microprocessor units (MPU), or another electronic element, for performing the foregoing method.

The present disclosure is described with reference to a flowchart and/or block diagram of the method, the device (system), and the computer program product according to the implementations of the present disclosure. It should be understood that each process and/or block in the flowchart and/or the block diagram, and a combination of the process and/or block in the flowchart and/or block diagram may be implemented by computer programs. These computer programs may be supplied to a general-purpose computer, a special-purpose computer, an embedded processor, or a processor of another programmable data processing device to generate a machine, so that a device configured to implement a specified function in one or more processes in the flowchart and/or one or more blocks in the block diagram is generated according to the instruction executed by the computer or the processor of another programmable data processing device.

These computer program indications may also be stored in a computer-readable memory that may guide the computer or another programmable data processing device to work in a specific manner, so that a product including an instruction apparatus may be generated according to the indications stored in the computer-readable memory. The instruction apparatus implements a specified function in one or more processes in the flowchart and/or one or more blocks in the block diagram.

These computer program indications may further be carried in a computer or another programmable data processing device, to execute a series of operations on the computer or another programmable device to generate processing of computer implementation, so that indications executed on the computer or another programmable device provide steps used for implementing a specified function in one or more processes in the flowchart and/or one or more blocks in the block diagram is generated according to the instruction executed by the computer or another programmable device.

The foregoing descriptions are merely preferred implementations of the present disclosure and are not intended to limit the protection scope of the present disclosure. Any modification, equivalent replacement and improvement made according to the spirit and principle of the present disclosure shall fall within the protection scope of the present disclosure.

## Claims

1. A response message processing method, the method comprising:
determining, by user equipment (UE), based on indication signaling sent by a network device, whether to send a response message corresponding to target data.

2. The method according to claim 1, wherein the indication signaling comprises a first information field;
correspondingly, the determining, by UE based on indication signaling sent by a network device, whether to send a response message corresponding to target data comprises:
determining, by the UE based on a value of the first information field, whether to send the response message corresponding to the target data.

3. The method according to claim 2, wherein the determining, by the UE based on a value of the first information field, whether to send the response message corresponding to the target data comprises:
determining not to send the response message corresponding to the target data when the UE determines that the value of the first information field is a first threshold; or
determining to send the response message corresponding to the target data when the UE determines that the value of the first information field is a second threshold.

4. The method according to claim 1, wherein the indication signaling comprises a second information field;
correspondingly, the determining, by UE based on indication signaling sent by a network device, whether to send a response message corresponding to target data comprises:
determining, by the UE based on the second information field, whether to send the response message corresponding to the target data, wherein the second information field is used for indicating a transmission period of the response message or not sending the response message.

5. The method according to claim 4, wherein the second information field comprises a physical downlink shared channel (PDSCH)-to-hybrid automatic repeat request (HARQ) feedback timing indicator.

6. The method according to claim 4, wherein the determining, by the UE based on the second information field, whether to send the response message corresponding to the target data comprises:
determining not to send the response message corresponding to the target data when the UE determines that the transmission period of the response message indicated in the second information field is a third threshold; or
determining to send the response message corresponding to the target data within the transmission period of the response message indicated in the second information field when the UE determines that the transmission period of the response message indicated in the second information field is not a third threshold; or
determining to send the response message corresponding to the target data within the transmission period of the response message indicated in the second information field when the UE determines that the transmission period of the response message indicated in the second information field is less than or equal to a fourth threshold.

7. The method according to claim 4, wherein the determining, by the UE based on the second information field, whether to send the response message corresponding to the target data comprises:
determining not to send the response message corresponding to the target data when the UE determines that the value of the second information field is a fifth threshold; or
determining to send the response message corresponding to the target data within the transmission period of the response message indicated in the second information field when the UE determines that the value of the second information field is not a fifth threshold.

8. The method according to any one of claims 4 to 7, the method further comprising:
determining, by the UE according to the value of the second information field and a first mapping relationship, the transmission period of the response message indicated in the second information field, wherein
the first mapping relationship is configured by the network device or agreed in a protocol.

9. The method according to claim 3, 6 or 7, wherein after the determining to send the response message corresponding to the target data, the method further comprises:
determining, by the UE, a physical resource for transmitting the response message.

10. The method according to claim 3, 6 or 7, wherein when it is determined not to send the response message corresponding to the target data, a third information field of the indication signaling is used for indicating information unrelated to the transmission of the response message; and
when it is determined to send the response message corresponding to the target data, the third information field is used for indicating information related to transmission of the response message.

11. The method according to claim 3, 6 or 7, wherein the values of the first threshold, the second threshold, the third threshold, the fourth threshold, and the fifth threshold are all configured by the network device or agreed in a protocol.

12. The method according to any one of claims 1 to 11, wherein the indication signaling is used for scheduling transmission of the target data.

13. The method according to any one of claims 1 to 12, wherein the indication signaling is downlink control signaling.

14. A response message processing method, the method comprising:
determining, by a network device, whether user equipment (UE) sends a response message corresponding to target data, and obtaining a determination result; and
sending indication signaling carrying the determination result to the UE.

15. The method according to claim 14, wherein the indication signaling comprises a first information field; and
it indicates that the UE does not send the response message corresponding to the target data when a value of the first information field is a first threshold; or
it indicates that the UE sends the response message corresponding to the target data when a value of the first information field is a second threshold.

16. The method according to claim 14, wherein the indication signaling comprises a second information field;
it indicates that the UE does not send the response message corresponding to the target data when a transmission period of the response message carried in the second information field is a third threshold; or
it indicates that the UE sends the response message corresponding to the target data within the transmission period of the response message indicated in the second information field when the transmission period of the response message carried in the second information field is not a third threshold; or
it indicates that the UE sends the response message corresponding to the target data within the transmission period of the response message indicated in the second information field when the transmission period of the response message indicated in the second information field is less than or equal to a fourth threshold; and
the second information field comprises a physical downlink shared channel (PDSCH)-to-hybrid automatic repeat request (HARQ) feedback timing indicator.

17. The method according to claim 14, wherein the indication signaling comprises a second information field;
it indicates that the UE does not send the response message corresponding to the target data when a value of the second information field is a fifth threshold; and
it indicates that the UE sends the response message corresponding to the target data within the transmission period of the response message indicated in the second information field when a value of the second information field is not the fifth threshold, wherein the second information field comprises a physical downlink shared channel (PDSCH)-to-hybrid automatic repeat request (HARQ) feedback timing indicator.

18. The method according to claim 15, 16 or 17, wherein the values of the first threshold, the second threshold, the third threshold, the fourth threshold, and the fifth threshold are all configured by the network device or agreed in a protocol.

19. The method according to claim 15, 16 or 17, wherein when the indication signaling indicates that the UE does not send the response message corresponding to the target data, the method further comprises:
setting a value of a third information field unrelated to the transmission of the response message, so that the indication signaling is used for indicating information unrelated to the transmission of the response message, wherein
when the indication signaling indicates that the UE sends the response message corresponding to the target data, the third information field being used for indicating information related to transmission of the response message.

20. The method according to any one of claims 14 to 19, wherein the indication signaling is used for scheduling transmission of the target data.

21. The method according to any one of claims 14 to 20, wherein the indication signaling is downlink control signaling.

22. User equipment (UE), comprising:
a receiving unit, configured to receive indication signaling sent by a network device; and
a determination unit, configured to determine, based on the indication signaling, whether to send a response message corresponding to target data.

23. The UE according to claim 22, wherein the indication signaling comprises a first information field; and
the determination unit is configured to determine, based on a value of the first information field, whether to send the response message corresponding to the target data.

24. The UE according to claim 23, wherein
the determination unit is configured to determine not to send the response message corresponding to the target data when it is determined that the value of the first information field is a first threshold; or
determine to send the response message corresponding to the target data when it is determined that the value of the first information field is a second threshold.

25. The UE according to claim 22, wherein the indication signaling comprises a second information field; and
the determination unit is configured to determine, based on the second information field, whether to send the response message corresponding to the target data, wherein the second information field is used for indicating a transmission period of the response message or not sending the response message.

26. The UE according to claim 25, wherein the second information field comprises a physical downlink shared channel (PDSCH)-to-hybrid automatic repeat request (HARQ) feedback timing indicator.

27. The UE according to claim 25, wherein
the determination unit is configured to: determine not to send the response message corresponding to the target data when the UE determines that the transmission period of the response message indicated in the second information field is a third threshold; or
determine to send the response message corresponding to the target data within the transmission period of the response message indicated in the second information field when the UE determines that the transmission period of the response message indicated in the second information field is not a third threshold; or
determine to send the response message corresponding to the target data within the transmission period of the response message indicated in the second information field when the UE determines that the transmission period of the response message indicated in the second information field is less than or equal to a fourth threshold.

28. The UE according to claim 25, wherein
the determination unit is configured to: determine not to send the response message corresponding to the target data when it is determined that the value of the second information field is a fifth threshold; or
determine to send the response message corresponding to the target data within the transmission period of the response message indicated in the second information field when it is determined that the value of the second information field is not a fifth threshold.

29. The UE according to any one of claims 25 to 28, wherein
the determination unit is further configured to determine, according to the value of the second information field and a first mapping relationship, the transmission period of the response message indicated in the second information field, wherein
the first mapping relationship is configured by the network device or agreed in a protocol.

30. The UE according to claim 24, 27 or 28, wherein
the determination unit is further configured to determine a physical resource for transmitting the response message.

31. The UE according to claim 24, 27 or 28, wherein when the determination unit determines not to send the response message corresponding to the target data, the indication signaling is used for indicating information unrelated to the transmission of the response message; and
when the determination unit determines to send the response message corresponding to the target data, a third information field is used for indicating information related to transmission of the response message.

32. The UE according to claim 24, 27 or 28, wherein the values of the first threshold, the second threshold, the third threshold, the fourth threshold, and the fifth threshold are all configured by the network device or agreed in a protocol.

33. The UE according to any one of claims 22 to 32, wherein the indication signaling is used for scheduling transmission of the target data.

34. The UE according to any one of claims 22 to 33, wherein the indication signaling is downlink control signaling.

35. A network device, comprising:
a judgment unit, configured to: determine whether user equipment (UE) sends a response message corresponding to target data, and obtain a determination result; and
a sending unit, configured to send indication signaling carrying the determination result to the UE.

36. The network device according to claim 35, wherein the indication signaling comprises a first information field; and
it indicates that the UE does not send the response message corresponding to the target data when a value of the first information field is a first threshold; or
it indicates that the UE sends the response message corresponding to the target data when a value of the first information field is a second threshold.

37. The network device according to claim 35, wherein the indication signaling comprises a second information field; and
it indicates that the UE does not send the response message corresponding to the target data when a transmission period of the response message carried in the second information field is a third threshold; or
it indicates that the UE sends the response message corresponding to the target data within the transmission period of the response message indicated in the second information field when the transmission period of the response message carried in the second information field is not a third threshold; or
it indicates that the UE sends the response message corresponding to the target data within the transmission period of the response message indicated in the second information field when a transmission period of the response message indicated in the second information field is less than or equal to a fourth threshold, wherein the second information field comprising a physical downlink shared channel (PDSCH)-to-hybrid automatic repeat request (HARQ) feedback timing indicator.

38. The network device according to claim 35, wherein the indication signaling comprises a second information field; and
it indicates that the UE does not send the response message corresponding to the target data when a value of the second information field is a fifth threshold; and
it indicates that the UE sends the response message corresponding to the target data within the transmission period indicated in the second information field when a value of the second information field is not the fifth threshold, wherein the second information field comprises a physical downlink shared channel (PDSCH)-to-hybrid automatic repeat request (HARQ) feedback timing indicator.

39. The method according to claim 36, 37 or 38, wherein the values of the first threshold, the second threshold, the third threshold, the fourth threshold, and the fifth threshold are all configured by the network device or agreed in a protocol.

40. The network device according to claim 36, 37 or 38, wherein the network device further comprises:
a setting unit, configured to set a value of an information field unrelated to the transmission of the response message when the indication signaling indicates that the UE does not send the response message corresponding to the target data, so that the indication signaling is used for indicating information related to transmission of the response message.

41. The network device according to any one of claims 35 to 40, wherein the indication signaling is used for scheduling transmission of the target data.

42. The network device according to any one of claims 35 to 41, wherein the indication signaling is downlink control signaling.

43. User equipment (UE), comprising a processor and a memory configured to store a computer program executable on the processor, wherein
the processor is configured to execute the computer program to perform the steps of the method according to any one of claims 1 to 13.

44. A network device, comprising a processor and a memory configured to store a computer program executable on the processor, wherein
the processor is configured to execute the computer program to perform the steps of the method according to any one of claims 14 to 21.

45. A storage medium, storing an executable program, wherein a processor executes the executable program to implement the response message processing method according to any one of claims 1 to 13 or implement the response message processing method according to any one of claims 14 to 21.
